# EUROPEAN PATENT SPECIFICATION

(11) **EP 1 216 561 B1**
(45) Date of publication and mention of the grant of the patent: **22.12.2004**
(21) Application number: 00960680.7
(22) Date of filing: 20.09.2000
(51) Int. Cl.: H04L 29/06

(54) **LAUNCHING APPLICATION FROM EMBEDDED INDICATOR IN SHORT MESSAGE SERVICE MESSAGE**
AUFRUFEN EINES ANWENDERPROGRAMMS DURCH EINEN EINGEBETTETEN INDIKATOR IN EINER SMS NACHRICHT
LANCEMENT D'APPLICATION A PARTIR D'INDICATEUR INCORPORE DANS DES MESSAGES SMS

(30) Priority: 21.09.1999 US 155066 P; 07.09.2000 US 657321
(43) Date of publication of application: 26.06.2002
(73) Proprietor: Telefonaktiebolaget LM Ericsson (publ), 164 83 Stockholm (SE)
(72) Inventor: HAKANSSON, Anders, Apex, NC 27502 (US)
(74) Representative: O'Connell, David Christopher
(86) International application number: PCT/EP2000/009209
(87) International publication number: WO 2001/022680

(56) References cited:
- EP-A- 0 458 563
- WO-A-98/53611

## Description

### BACKGROUND

The present invention relates to wireless communication, more particularly to the use of wireless communication to link a wireless device to a computer network, and even more particularly to techniques and apparatuses for launching an application, such as a web browser, from a wireless communication device.

Wireless communication devices, such as cellular telephones, continue to grow in popularity around the world. Such devices free their owners from having to remain at a fixed location (e.g., in one's home or office) or otherwise seek out a wireline telephone in order to remain in communication (including just being reachable) with others. Traditionally, wireless communication devices provide the ability to establish a voice connection with one or more others, who may similarly be using a wireless communication device, or who may alternatively be using a wireline telephone.

In addition to traditional voice communications, there is an increasing demand from customers for advanced telephony services, such as automated services that may be accessed and commanded by control sequences that are transmitted from a remote location. As a consequence, techniques have been developed for providing wireless access to services from a communications network. In the world of wireless communication, this has included the development of a Wireless Application Protocol (WAP), which is a layered communication protocol that includes network layers (e.g., transport and session layers) as well as an application environment including a microbrowser (henceforth, "browser"), scripting, telephony value-added services and content formats. One part of WAP is the Telephony Value Added Services (TeleVAS), which is a secure way to access local functions like Call Control, Phonebook, Messaging and the like by means of a device independent interface to the underlying vendor specific operating system and telephony subsystem.

In fixed networks, techniques for providing access to services from a communications network have included the use of Intelligent Networks in which Service Access Points are nodes in the network that customers can access to obtain advanced services. It has also become common to access services at nodes that are independent of any traditional network operator. These nodes are implemented as service computers that can be connected in independent computer networks (e.g., the Internet) and accessed from at least one communications network (e.g., a telephony network or a mobile network such as the European standard Global System for Mobile Communication (GSM)). The communications network (e.g., a public telephony network or a mobile network) is then only utilized for establishing access to these independent computer networks. In order to keep the services provided by the network of service nodes independent of the traditional telecommunication networks, the access to a service node through such a telecommunications network can carry both data (e.g., speech) and control signaling on the same channel (i.e., in-band signaling can be applied).

In a cellular communications system, it is common for operators to offer a Short Message Service (SMS) for sending short messages to the cellular terminal. The messages are routed over a Short Message Service Center (SMS-C) server that stores and forwards the messages. The various SMS messages may constitute information intended only for internal use within the mobile communication device (e.g., information to be stored within the Subscriber Information Module (SIM) in a cellular telephone), or they may constitute text messages from one person to the user of the mobile communication device. In this latter case, the text message is displayed to the user by means of a screen that is part of the device's user interface.

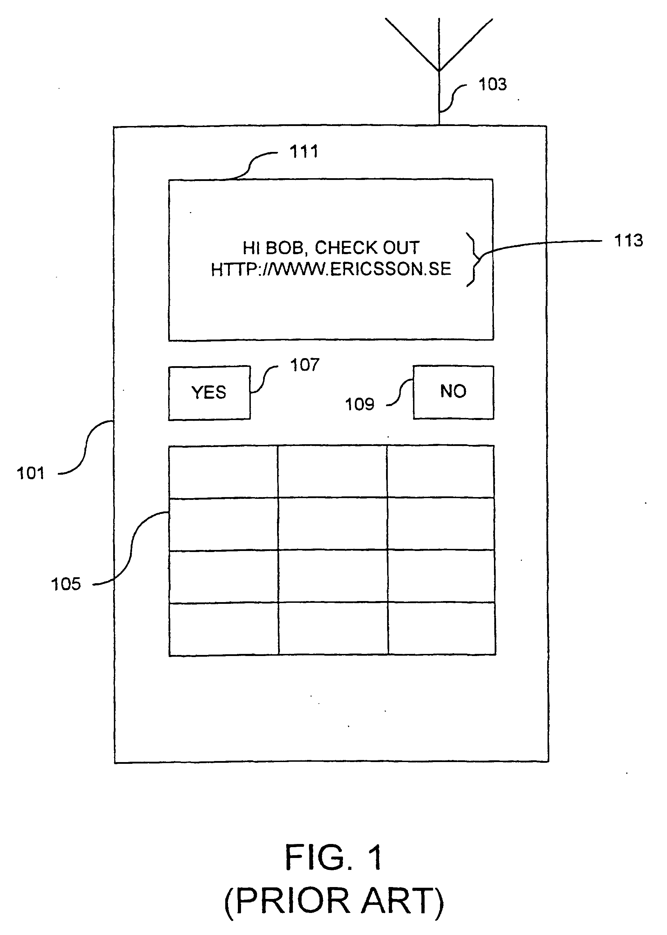

FIG. 1 illustrates a conventional mobile terminal 101. The mobile terminal 101 includes communication circuitry 103 (schematically represented in FIG. 1 by the antenna) for establishing and maintaining a wireless communication link with a base station (not shown) that is part of the Public Land Mobile Network (PLMN). The communication circuitry 103 can be designed to operate in accordance with any of a number of standards. For example, in Europe the communication circuitry 103 may be designed in accordance with the Global System for Mobile communication (GSM) standards, which are promulgated by ETSI.

The mobile terminal 101 has a user interface that includes a keypad 105 and related circuitry for receiving alpha-numeric information supplied by the user. The user interface further includes various input keys, such as the "YES" key 107 and the "NO" key 109, which allow the user to supply certain selection control signals. The meaning of the selection control signals is generally context dependent.

For output, the user interface further includes a display 111, which can display alpha-numeric information, and in some instances, graphical information as well. When an SMS message is received in the mobile terminal 101, it is displayed on the display 111. If the length of the message is longer than the size of the display 111, the user can use the various control keys to cause the display circuitry (not shown) within the mobile terminal 101 to scroll the message so that it can be viewed piecemeal in its entirety.

European Patent Application EP-A-0 458 563 describes a telephone apparatus that can receive alphanumeric messages and display them in a display. While the message is being displayed, the user must manually initiate a number search keying, whereupon the telephone will search, starting from the beginning of the message, for a character string which could be a telephone number. The user may also search the message for a telephone number and halt the display at this point. In any case , the procedure must be either initiated or fully performed by the user. If the user accepts the number he performs an acceptance keying, whereupon the telephone will eliminate from the display any characters following the number and any non-numeric characters inside the number so that only the telephone number is visible in the display and in the number register to allow dialing of the number. The objective is that the register and the display of the telephone are now precisely the same as they would be upon the user having fed in the telephone number in its entirety and conventionally, by means of the number keys. A call to a number also takes place in the same manner as in a "normal" call. No provisions are made for automatically locating URIs (or phone numbers for that matter) or for initiating applications from embedded URIs.

International Application WO 98 53611 A relates to a method and transmitter for transmitting additional information in the form of web pages with a television signal. The transmission includes triggers for invoking the web pages, the triggers indicating that additional information is available about a current television program via the web page.

As mentioned earlier, mobile communication equipment is now beginning to include circuitry that permits the user to access computer networks, such as the Internet, by means of protocols such as WAP. Part of this capability includes the provision of web browser software/circuitry (e. g., a WAP browser) within the mobile terminal 101. A web browser allows the user to access and navigate through the computer network. As part of this process, content from the computer network is displayed to the user on the display 111. The user may also be able to supply information to the computer network by inputting the information on the keypad 105. The web browser formats the input in accordance with the applicable protocol (e.g., WAP), and forwards it to the computer network.

It is not uncommon for one user to communicate with one or more others about interesting web sites that should be "visited". This information can be communicated in an SMS message sent from one user to another. For example, FIG. 1 depicts a received SMS message 113 on the display 111 that reads "Hi Bob, Check out http://www.ericsson.se". In this case, the embedded text string "http://www.ericsson.se" within the SMS message represents a Universal Resource Locator (URL) that can be used by the web browser to access the corresponding computer network site ("web page").

In a conventional mobile terminal 101, the recipient of the illustrated SMS message 113 would have to take steps to remember the embedded URL (e.g., by committing it to memory, or by writing down the text string "http://www.ericsson.se"), and then operating the user interface to bring up the mobile terminal's web browser. Once the web browser is running, the user then needs to use the keypad 105 and the control input keys "YES" 107 and "NO" 109 to enter the URL into the web browser's user interface and command the web browser to access the requested web page. This much effort on the part of the user is both tedious and error prone.

Similar problems exist in connection with launching other applications (e.g., "mailto:, which is a mail application) to access particular content based on an embedded Uniform Resource Indicator (URI) within a received SMS message.

In some conventional mobile terminals, it is possible to have a web browser automatically access a desired web page by using a selected bookmark or any other predefined Uniform Resource Identifier (URI), such as a home page. However, these solutions are inflexible and limited in that they do not address the problem of wanting to access a web page whose URL is embedded in an SMS message. That is, they require that the user manually launch the web browser, and supply the URI that was contained in the SMS message.

Therefore, there is a desire for a more convenient way for mobile terminal users to launch a suitable web browser and access a particular web page when the URL for that web page is embedded in a received SMS message.

### SUMMARY

It should be emphasized that the terms "comprises" and "comprising", when used in this specification, are taken to specify the presence of stated features, integers, steps or components; but the use of these terms does not preclude the presence or addition of one or more other features, integers, steps, components or groups thereof.

In accordance with one aspect of the present invention, the foregoing and other objects are achieved in a mobile terminal. More particularly, invocation of an application associated with a Uniform Resource Indicator (URI) embedded in a text message received in the mobile terminal is facilitated by receiving a text message in the mobile terminal, and determining whether the received text message includes text that represents a Uniform Resource Indicator (URI). If the received text message includes the text that represents the URI, then the following are performed: automatically making the text that represent the URI user selectable by distinguishing the URI within the message; storing a corresponding pointer to the URI in a memory of the mobile terminal; detecting that a user has selected the text that represents the URI; retrieving the corresponding pointer to the URI from the memory; identifying, from among one or more applications supported by the mobile terminal, an application associated with the URI ; and invoking the associated application. For example, a user may be able to select a highlighted Uniform Resource Locator (URL) embedded in a received Short Message Service (SMS) message that is displayed on the mobile terminal, thereby launching a web browser to access the information identified by the URL.

### BRIEF DESCRIPTION OF THE DRAWINGS

The objects and advantages of the invention will be understood by reading the following detailed description in conjunction with the drawings in which:
FIG. 1 is a block diagram of a conventional mobile terminal with a received SMS message being presented to the user on the display;
FIG. 2 is a block diagram of a mobile terminal with logic for displaying and making user-selectable a portion of a received text message that includes a URI; and
FIG. 3 is a flow chart depicting an exemplary operation of browser launch control logic in accordance with the invention.

### DETAILED DESCRIPTION

The various features of the invention will now be described with respect to the figures, in which like parts are identified with the same reference characters.

The various aspects of the invention will now be described in detail in connection with a number of exemplary embodiments. To facilitate an understanding of the invention, many aspects of the invention are described in terms of sequences of actions to be performed by elements of a computer-based system. It will be recognized that in each of the embodiments, the various actions could be performed by specialized circuits (e.g., discrete logic gates interconnected to perform a specialized function), by program instructions being executed by one or more processors, or by a combination of both. Moreover, the invention can additionally be considered to be embodied entirely within any form of computer readable storage medium having stored therein an appropriate set of computer instructions that would cause a processor to carry out the techniques described herein. Thus, the various aspects of the invention may be embodied in many different forms, and all such forms are contemplated to be within the scope of the invention. For each of the various aspects of the invention, any such form of embodiment may be referred to herein as "logic configured to" perform a described action, or alternatively as "logic that" performs a described action.

The invention provides a mechanism that enables a mobile terminal user to easily launch a suitable web browser and access a web page when the URL for that web page is presented as embedded text in a received SMS message. In one aspect of the invention, control logic is provided that identifies the presence of the embedded URL within the received SMS message. In another aspect of the invention, the identified embedded URL may be displayed to the user in some highlighted fashion (e.g., via underlined text, reverse text fonts, different color scheme, and the like) so that the user can more easily recognize the existence of the embedded URL within the received SMS message. In yet another aspect of the invention, the user can use one or more control keys on the mobile terminal to "select" the highlighted embedded URL. Control logic within the mobile terminal responds to this action by launching the corresponding web browser and directing the web browser to access the web page identified by the highlighted embedded URL.

In alternative embodiments, the inventive concepts are also applied to facilitate the launching of other applications (e.g., "mailto:, which is a mail application) to access particular content based on an embedded Uniform Resource Indicator (URI) within a received SMS message.

These and other aspects of the invention will now be described in greater detail.

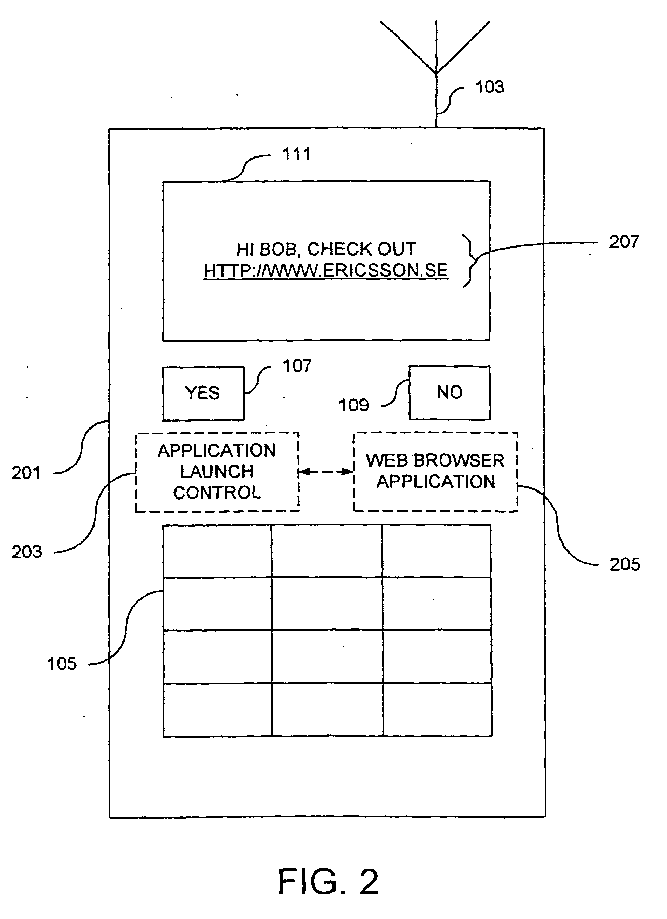

Referring now to FIG. 2, this is an illustration of an exemplary mobile terminal 201 for carrying out the invention. The mobile terminal 201 includes communication circuitry 103 (schematically represented in FIG. 1 by the antenna) for establishing and maintaining a wireless communication link with a base station (not shown) that is part of the Public Land Mobile Network (PLMN). The communication circuitry 103 can be designed to operate in accordance with any of a number of known standards. For example, in Europe the communication circuitry 103 may be designed in accordance with the Global System for Mobile communication (GSM) standards, which are promulgated by ETSI.

The mobile terminal 201 has a user interface that includes a keypad 105 and related circuitry for receiving alpha-numeric information supplied by the user. The user interface further includes various input keys, such as the "YES" key 107 and the "NO" key 109, which allow the user to supply certain selection control signals. The meaning of the selection control signals is generally context dependent.

For output, the user interface further includes a display 111, which can display alpha-numeric information, and in some instances, graphical information as well. When an SMS message is received in the mobile terminal 201, it is processed through application (e.g., browser) launch control logic 203 (described in greater detail below, and depicted in dashed lines to indicate that this logic is not visible on the face of the mobile terminal 201) and displayed on the display 111. If the length of the message is longer than the size of the display 111, the user can use the various control keys to cause the display circuitry (not shown) within the mobile terminal 201 to scroll the message so that it can be viewed piecemeal in its entirety.

The mobile terminal 201 further includes circuitry that permits the user to access computer networks, such as the Internet, by means of protocols such as WAP. Part of this capability includes the provision of a web browser application 205 (e.g., a WAP browser) (depicted in dashed lines to indicate that this logic is not visible on the face of the mobile terminal 201) within the mobile terminal 201. A web browser allows the user to access and navigate through the computer network. As part of this process, content from the computer network is displayed to the user on the display 111. The user may also be able to supply information to the computer network by inputting the information on the keypad 105. The web browser formats the input in accordance with the applicable protocal (e.g., WAP), and forwards it to the computer network.

As mentioned earlier, a received SMS message is first processed by the application launch control logic 203 prior to its being displayed on the display 111. This processing includes parsing the received SMS message to detect the presence of a URI. This is possible because the syntax of URIs has been standardized. A description of this syntax may be found in, for example, "Uniform Resource Identifiers (URI): Generic Syntax", published by The Internet Society in 1998, which is hereby incorporated herein by reference in its entirety. In the example that follows, the URI is presumed to be a URL. However, this presumption is not essential, but rather is made only for the purpose of illustrating the invention. The invention may be applied to any sort of URI, and the corresponding application program that can be invoked to access the information designated by the URI. Examples of URIs include, but are not limited to, an ftp scheme for File Transfer Protocol services; a gopher scheme for Gopher and Gopher+ Protocol services; an http scheme for Hypertext Transfer Protocol services; a news scheme for USENET news groups and articles; and a telnet scheme for interactive services via the TELNET Protocol.

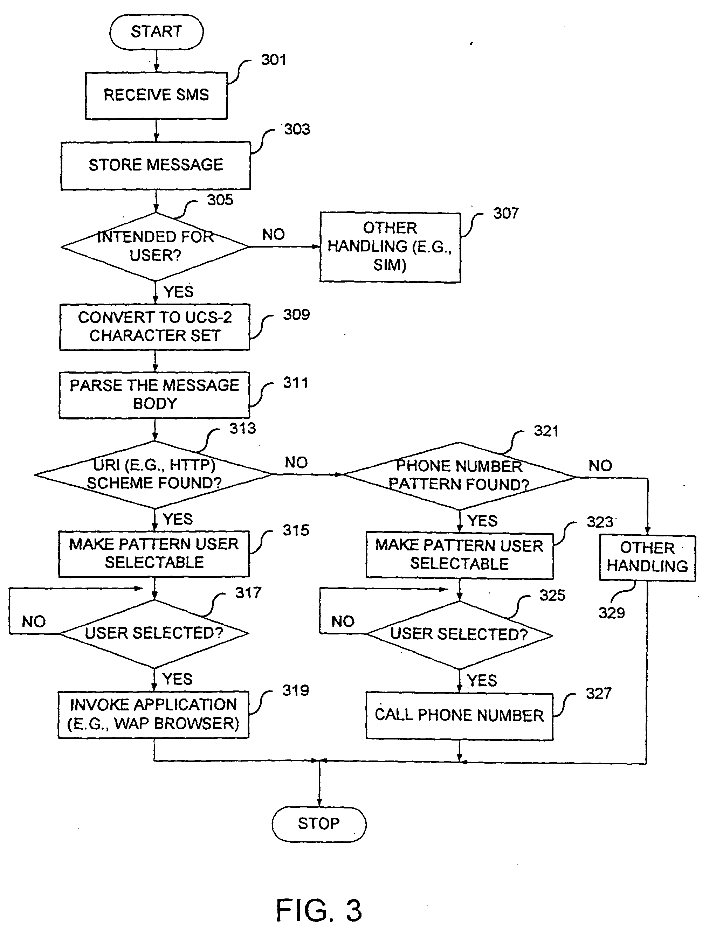

The operation of the application launch control logic 203 will now be described in detail in connection with the flow chart of FIG. 3. The description starts with the receipt of a text message in the mobile terminal (step 301). In the exemplary embodiment, the mobile terminal is presumed to operate in accordance with GSM standards, so the received text message is an SMS message. However, it will be recognized that the use of SMS is not essential to the invention, and that for terminals operating in accordance with other standards, the format of the received text message may differ somewhat from that specified by SMS.

Having received the text message, it is preferably stored in a memory (step 303) so that it can be recalled for further processing. This however, is not essential to the invention.

The processing of the received text message includes a test to determine whether it is intended to be seen by the user (decision block 305). For example, in the SMS messaging service, there are different classes of SMS messages. For example, some SMS messages contain information that is intended only to be stored in the mobile terminal's Subscriber Information Module (SMS), and is never displayed to the user. The different classes of SMS messages used in GSM are described in GSM 03.40. If the received text message is not intended to be displayed to the user ("NO" path out of decision block 305), then other suitable handling is performed (step 307). The nature of this other handling is not pertinent to the invention, and will therefore not be described here.

If the received text message is intended to be presented to the user ("YES" path out of decision block 305), then it is preferably converted to a uniform character set (step 309), such as the UCS-2 character set which is defined by the Unicode Consortium. Information about Unicode may be found on the Internet at http://www.unicode.org. The conversion of the received text message to a uniform character set is by no means essential to the invention. However, in embodiments in which the received text message can arrive in any of a number of different formats, conversion to a common format permits all subsequent processing within the mobile terminal to occur without concern for how to interpret the received characters.

Next, the body of the received text message is parsed (step 311) in order to determine whether a URI (e.g., a URL) is present (decision block 313). For example, the presence of the text string "http:" within the received text message most likely indicates the presence of a URL for identifying a source of hypertext. If a URI is detected within the received text message ("YES" path out of decision block 313), then the URI portion of the received text message is made user selectable (step 315). This means that it is displayed to the user in a font that makes it distinct from the remaining text. For example, it may be underlined, displayed in bold text, displayed in reverse video, or any combination of these and other highlighting techniques.

To illustrate the point, FIG. 2 depicts a received SMS message 207 on the display 111 that reads "Hi Bob, Check out http://www.ericsson.se". In this case, the embedded text string "http://www.ericsson.se" within the SMS message represents a URL that can be used by the web browser 205 to access the corresponding computer network site ("web page"). In accordance with the invention, the display of this URL has included underlining, to set it apart from the remainder of the message. Making the URL user selectable also includes providing a capability for the user to indicate that he or she would like to launch a suitable application (e.g., a web browser) that will allow him or her to access the information represented by the received URL. This action (henceforth referred to as "selecting" the URL) may be accomplished by storing a pointer to the highlighted text at a location in memory within the mobile terminal. When the user selects the URL (e.g., by pressing the YES key 107) ("YES" path out of decision block 317), the application launch control logic 203 retrieves the pointer to the URL and invokes the appropriate application (e.g., the web browser application 205) (step 319), with the URL being passed to the application as an input parameter.

It is noted that generally, the display 111 on the mobile terminal 201 is only large enough to display one URI at a time, so there is never any ambiguity concerning which URI has been selected whenever a received text message includes more than one URI. However, in alternative embodiments in which more than one URI can be displayed to the user at once, suitable provisions (e.g., a cursor that the user can maneuver through the text string) can be provided to eliminate any ambiguities that may exist concerning which URI is meant when the user activates the YES key 107.

Returning now to decision block 313, if no URI scheme is found in the received text message ("NO" path out of decision block 313), then processing proceeds by parsing the received text message to determine whether other predefined patterns exist. For example, the text can be parsed to determine whether a telephone number pattern is present (step 321). There can be many different types of number patterns that indicate the presence of a telephone number, and these patterns are predefined by telephone systems. For example, in GSM systems, the rules for phone number patterns are defined in GSM 02.30 section 4.5.3.2.

If a phone number pattern is found ("YES" path out of decision block 321), then the phone number embedded in the received text message can be made user selectable (step 323) in the same way that the embedded URI pattern was made user selectable (refer back to step 315). Once a user selects the highlighted telephone number ("YES" path out of step 325), an application that dials the indicated phone number can be launched (step 327).

Returning to decision block 321, if a phone number pattern is not found in the received text message ("NO" path out of decision block 321), then other suitable handling can be performed (step 329). The nature of this other handling is beyond the scope of the invention, and is therefore not described here further.

It will be observed that in the illustrated embodiment, the checking for an embedded URI occurred prior to the checking for an embedded telephone number. While this is not an essential feature of the invention, checking in this order can provide advantages because there are many different possible telephone number patterns, and as a result, there is an increased likelihood that what is, in fact, a URI, may accidentally include a text pattern that also matches one of the legal telephone number patterns. If checking were to be performed in the reverse order (i.e., checking for an embedded telephone number, followed by checking for an embedded URI), then there is an increased likelihood that the application launch control logic 203 would mistakenly highlight what appeared to be a telephone number, and fail to recognize the actual existence of an embedded URI.

The invention has been described with reference to a particular embodiment. However, it will be readily apparent to those skilled in the art that it is possible to embody the invention in specific forms other than those of the preferred embodiment described above. The preferred embodiment is merely illustrative and should not be considered restrictive in any way. The scope of the invention is given by the appended claims, rather than the preceding description, and all variations and equivalents which fall within the range of the claims are intended to be embraced therein.

## Claims

1. A method of operating a mobile terminal (201), the mobile terminal (201) supporting one or more applications that send and receive information based on a Uniform Resource Indicator, URI, the method **characterized by** the steps of:
receiving a text message (207) in the mobile terminal (201);
automatically determining whether the received text message (207) includes text that represents a URI; and
if the received text message (207) includes the text that represents the URI, then performing the following:
automatically making the text that represents the URI user selectable by distinguishing the URI within the message;
storing a corresponding pointer to the URI in a memory of the mobile terminal (201);
detecting that a user has selected the text that represents the URI;
retrieving the corresponding pointer to the URI from the memory;
identifying, from among the one or more applications, an application (205) associated with the URI ; and
invoking the associated application (205).

2. The method of claim 1, wherein the step of automatically making the text that represents the URI user selectable includes displaying the text that represents the URI in a highlighted form, whereby the display of the text that represents the URI is different from other text in the received text message (207).

3. The method of claim 2, wherein the highlighted form includes underlined text.

4. The method of claim 2, wherein the highlighted form includes text that is displayed in a reversed font.

5. The method of claim 2, wherein the highlighted form includes text that is displayed in a bold font compared to other text in the received text message (207).

6. The method of claim 2, wherein the highlighted form includes text that is displayed in a different color compared to a display color of other text in the received text message (207).

7. The method of claim 1, wherein the step of automatically making the text that represents the URI user selectable includes selecting one of a plurality of URI's in the message, each having a respective pointer stored in the memory.

8. The method of claim 1, wherein detecting that the user has selected the text that represents the URI comprises detecting that the user has activated a predefined key on the mobile unit at a time when the text that represents the URI is displayed on a display of the mobile unit.

9. The method of claim 1, wherein the application (205) that is associated with the URI is a web browser.

10. The method of claim 9, wherein the web browser is a Wireless Application Protocol WAP-compatible browser.

11. The method of claim 1, wherein the application (205) that is associated with the URI is an email application (205).

12. The method of claim 1, wherein the application (205) that is associated with the URI is a File Transfer Protocol service.

13. The method of claim 1, wherein the application (205) that is associated with the URI is a news scheme for USENET news groups.

14. The method of claim 1, wherein the application (205) that is associated with the URI is a gopher scheme for Gopher and Gopher + Protocol services.

15. The method of claim 1, wherein the application (205) that is associated with the URI is a telnet scheme for interactive services via the TELNET Protocol.

16. A mobile terminal (201) adapted to support one or more applications that send and receive information based on a Uniform Resource Indicator, URI, the mobile terminal (201) **characterized in that** it further comprises:
logic means adapted to receive a text message (207) in the mobile terminal (201);
logic means adapted to automatically determine whether the received text message (207) includes text that represents a URI; and
logic means adapted to perform the following if the received text message (207) includes the text that represents the URI:
automatically making the text that represents the URI user selectable by distinguishing the URI within the message;
storing a corresponding pointer to the URI in a memory of the mobile ' terminal (201);
detecting that a user has selected the text that represents the URI;
retrieving the corresponding pointer to the URI from the memory;
identifying, from among the one or more applications, an application (205) associated with the URI ; and
invoking the associated application (205).

17. The apparatus of claim 16, wherein the logic means adapted to automatically make the text that represents the URI user selectable includes logic means adapted to display the text that represents the URI in a highlighted form, whereby the display of the text that represents the URI is different from other text in the received text message (207).

18. The apparatus of claim 17, wherein the highlighted form includes underlined text.

19. The apparatus of claim 17, wherein the highlighted form includes text that is displayed in a reversed font.

20. The apparatus of claim 17, wherein the highlighted form includes text that is displayed in a bold font compared to other text in the received text message (207).

21. The apparatus of claim 17, wherein the highlighted form includes text that is displayed in a different color compared to a display color of other text in the received text message (207).

22. The apparatus of claim 17, wherein the logic means adapted to automatically make the text that represents the URI user selectable further includes logic means adapted to select one of a plurality of URI's in the message, each having a respective pointer stored in the memory.

23. The apparatus of claim 16, wherein the logic means adapted to detect that the user has selected the text that represents the URI comprises logic means adapted to detect that the user has activated a predefined key on the mobile unit at a time when the text that represents the URI is displayed on a display of the mobile unit.

24. The apparatus of claim 16, wherein the application (205) that is associated with the URI is a web browser.

25. The apparatus of claim 24, wherein the web browser is a Wireless Application Protocol WAP-compatible browser.

26. The apparatus of claim 16, wherein the application (205) that is associated with the URI is an email application (205).

27. The apparatus of claim 16, wherein the application (205) that is associated with the URI is a File Transfer Protocol service.

28. The apparatus of claim 16, wherein the application (205) that is associated with the URI is a news scheme for USENET news groups.

29. The apparatus of claim 16, wherein the application (205) that is associated with the URI is a gopher scheme for Gopher and Gopher + Protocol services.

30. The apparatus of claim 16, wherein the application (205) that is associated with the URI is a telnet scheme for interactive services via the TELNET Protocol.

## Patentansprüche

1. Verfahren zum Betreiben eines mobilen Endgerätes (201), wobei das mobile Endgerät eine oder mehr Applikationen unterstützt, die Information basierend auf einem einheitlichen Ressourcenindikator, URI, senden und empfangen, wobei das Verfahren durch die Schritte gekennzeichnet ist:
Empfangen einer Textnachricht (207) in dem mobilen Endgerät (201);
automatisches Bestimmen, ob die empfangene Textnachricht (207) Text inkludiert, der einen URI darstellt; und
falls die empfangene Textnachricht (207) den Text inkludiert, der den URI darstellt, dann Durchführen des folgenden:
automatisches Wählbarmachen durch einen Benutzer des Textes, der den URI darstellt, durch Kennzeichnen des URI innerhalb der Nachricht;
Speichern eines entsprechenden Zeigers auf den URI in einem Speicher des mobilen Endgerätes (201);
Erfassen, dass ein Benutzer den Text ausgewählt hat, der den URI darstellt;
Abfragen des entsprechenden Zeigers auf den URI aus dem Speicher;
Identifizieren einer Applikation (205) von unter der einen oder mehr Applikationen, die mit dem URI in Verbindung steht; und
Aufrufen der zugehörigen Applikation (205).

2. Verfahren nach Anspruch 1, wobei der Schritt zum automatischen Wählbarmachen durch einen Benutzer des Textes, der den URI darstellt, Anzeigen des Textes, der den URI darstellt, in einer hervorgehobenen Form inkludiert, wodurch sich die Anzeige des Textes, der den URI darstellt, von anderem Text in der empfangenen Textnachricht (207) unterscheidet.

3. Verfahren nach Anspruch 2, wobei die hervorgehobene Form unterstrichenen Text inkludiert.

4. Verfahren nach Anspruch 2, wobei die hervorgehobene Form Text inkludiert, der in einem umgekehrten Font angezeigt wird.

5. Verfahren nach Anspruch 2, wobei die hervorgehobene Form Text inkludiert, der im Vergleich zu anderem Text in der empfangenen Textnachricht (207) in einem fett gedruckten Font angezeigt wird.

6. Verfahren nach Anspruch 2, wobei die hervorgehobene Form Text inkludiert, der im Vergleich zu einer Anzeigefarbe von anderem Text in der empfangenen Textnachricht (207) in einer anderen Farbe angezeigt wird.

7. Verfahren nach Anspruch 1, wobei der Schritt zum automatischen Wählbarmachen durch einen Benutzer des Textes, der den URI darstellt, Auswählen von einem aus einer Vielzahl von URI's in der Nachricht inkludiert, jeder mit einem jeweiligen Zeiger, der in dem Speicher gespeichert ist.

8. Verfahren nach Anspruch 1, wobei Erfassen, dass der Benutzer den Text ausgewählt hat, der den URI darstellt, Erfassen umfasst, dass der Benutzer eine vordefinierte Taste in der mobilen Einheit zu einer Zeit aktiviert hat, wenn der Text, der den URI darstellt, auf einer Anzeige der mobilen Einheit angezeigt wird.

9. Verfahren nach Anspruch 1, wobei die Applikation (205), die mit dem URI in Verbindung steht, ein Webbrowser ist.

10. Verfahren nach Anspruch 9, wobei der Webbrowser ein Browser ist, der zu dem drahtlosen Applikationsprotokoll WAP kompatibel ist.

11. Verfahren nach Anspruch 1, wobei die Applikation (205), die mit dem URI in Verbindung steht, eine E-Mail-Applikation (205) ist.

12. Verfahren nach Anspruch 1, wobei die Applikation (205), die mit dem URI in Verbindung steht, ein Dateiübertragungsprotokolldienst ist.

13. Verfahren nach Anspruch 1, wobei die Applikation (205), die mit dem URI in Verbindung steht, ein Nachrichtenschema für USENET-Nachrichtengruppen ist.

14. Verfahren nach Anspruch 1, wobei die Applikation (205), die mit dem URI Verbindung steht, ein Gopher-Schema für Gopher und Gopher+ Protokolldienste ist.

15. Verfahren nach Anspruch 1, wobei die Applikation (205), die mit dem URI Verbindung steht, ein Telnet-Schema für interaktive Dienste über das TELNET-Protokoll ist.

16. Mobiles Endgerät (201), angepasst, eine oder mehr Applikationen zu unterstützen, die Information basierend auf einem einheitlichen Ressourcenindikator, URI, senden und empfangen, wobei das mobile Endgerät (201) **dadurch gekennzeichnet ist, dass** es ferner umfasst:
Logikmittel, angepasst, eine Textnachricht (207) in dem mobilen Endgerät (201) zu empfangen;
Logikmittel, angepasst, automatisch zu bestimmen, ob die empfangene Textnachricht (207) Text inkludiert, der einen URI darstellt; und
Logikmittel, angepasst, das Folgende durchzuführen, falls die empfangene Textnachricht (207) den Text inkludiert, der den URI darstellt:
automatisches Wählbarmachen durch einen Benutzer des Textes, der den URI darstellt, durch Kennzeichnen des URI innerhalb der Nachricht;
Speichern eines entsprechenden Zeigers auf den URI in einem Speicher des mobilen Endgerätes (201);
Erfassen, dass ein Benutzer den Text ausgewählt hat, der den URI darstellt;
Abfragen des entsprechenden Zeigers auf den URI aus dem Speicher;
Identifizieren einer Applikation (205) von unter der einen oder mehr Applikationen, die mit dem URI in Verbindung steht; und
Aufrufen der zugehörigen Applikation (205).

17. Vorrichtung nach Anspruch 16, wobei das Logikmittel, das angepasst ist, den Text, der den URI darstellt, automatisch durch einen Benutzer wählbar zu machen, ein Logikmittel inkludiert, das angepasst ist, den Text, der den URI darstellt, in einer hervorgehobenen Form anzuzeigen, wodurch sich die Anzeige des Textes, der den URI darstellt, von anderem Text in der empfangenen Textnachricht (207) unterscheidet.

18. Vorrichtung nach Anspruch 17, wobei die hervorgehobene Form unterstrichenen Text inkludiert.

19. Vorrichtung nach Anspruch 17, wobei die hervorgehobene Form Text inkludiert, der in einem umgekehrten Font angezeigt wird.

20. Vorrichtung nach Anspruch 17, wobei die hervorgehobene Form Text inkludiert, der im Vergleich zu anderem Text in der empfangenen Nachricht (207) in einem fett gedruckten Font angezeigt wird.

21. Vorrichtung nach Anspruch 17, wobei die hervorgehobene Form Text inkludiert, der im Vergleich zu einer Anzeigefarbe von anderem Text in der empfangenen Textnachricht (207) in einer anderen Farbe angezeigt wird.

22. Vorrichtung nach Anspruch 17, wobei das Logikmittel, das angepasst ist, den Text, der den URI darstellt, automatisch durch einen Benutzer wählbar zu machen, ferner ein Logikmittel inkludiert, das angepasst ist, einen aus einer Vielzahl von URI's in der Nachricht auszuwählen, jeder mit einem jeweiligen Zeiger, der in dem Speicher gespeichert ist.

23. Verfahren nach Anspruch 16, wobei das Logikmittel, das angepasst ist zu erfassen, dass der Benutzer den Text ausgewählt hat, der den URI darstellt, ein Logikmittel umfasst, das angepasst ist zu erfassen, dass der Benutzer eine vordefinierte Taste in der mobilen Einheit zu einer Zeit aktiviert hat, wenn der Text, der den URI darstellt, auf einer Anzeige der mobilen Einheit angezeigt wird.

24. Vorrichtung nach Anspruch 16, wobei die Applikation (205), die mit dem URI in Verbindung steht, ein Webbrowser ist.

25. Vorrichtung nach Anspruch 24, wobei der Webbrowser ein Browser ist, der zum drahtlosen Applikationsprotokoll WAP kompatibel ist.

26. Vorrichtung nach Anspruch 16, wobei die Applikation (205), die mit dem URI in Verbindung steht, eine E-Mail-Applikation (205) ist.

27. Vorrichtung nach Anspruch 16, wobei die Applikation (205), die mit dem URI in Verbindung steht, ein Dateiübertragungsprotokolldienst ist.

28. Vorrichtung nach Anspruch 16, wobei die Applikation (205), die mit dem URI in Verbindung steht, ein Nachrichtenschema für USENET-Nachrichtengruppen ist.

29. Vorrichtung nach Anspruch 16, wobei die Applikation (205), die mit dem URI in Verbindung steht, ein Gopher-Schema für Gopher und Gopher+ Protokolldienste ist.

30. Vorrichtung nach Anspruch 16, wobei die Applikation (205), die mit dem URI in Verbindung steht, ein Telnet-Schema für interaktive Dienste über das TELNET-Protokoll ist.

## Revendications

1. Procédé pour faire fonctionner un terminal mobile (201), le terminal mobile (201) supportant une ou plusieurs applications qui envoient et reçoivent de l'information sur la base d'un indicateur appelé Uniform Resource Indicator, URI, le procédé étant **caractérisé par** les étapes suivantes :
on reçoit un message de texte (207) dans le terminal mobile (201);
on détermine automatiquement si le message de texte reçu (207) contient du texte qui représente un URI; et
si le message de texte reçu (207) contient le texte qui représente l'URI, on accomplit ce qui suit :
on fait automatiquement en sorte que le texte qui représente l'URI puisse être sélectionné par l'utilisateur, en distinguant l'URI à l'intérieur du message;
on stocke dans une mémoire du terminal mobile (201) un pointeur correspondant dirigé vers l'URI;
on détecte qu'un utilisateur a sélectionné le texte qui représente l'URI;
on extrait de la mémoire le pointeur correspondant dirigé vers l'URI;
on identifie, parmi la ou les applications, une application (205) associée à l'URI; et
on appelle l'application associée (205).

2. Procédé selon la revendication 1, dans lequel l'étape consistant à faire automatiquement en sorte que le texte qui représente l'URI puisse être sélectionné par l'utilisateur comprend la visualisation du texte qui représente l'URI en une forme mise en évidence, grâce à quoi la visualisation du texte qui représente l'URI est différente de celle du texte restant dans le message de texte reçu (207).

3. Procédé selon la revendication 2, dans lequel la forme mise en évidence comprend du texte souligné.

4. Procédé selon la revendication 2, dans lequel la forme mise en évidence comprend du texte qui est visualisé avec une police inversée.

5. Procédé selon la revendication 2, dans lequel la forme mise en évidence comprend du texte qui est visualisé avec une police en gras, en comparaison avec le texte restant dans le message de texte reçu (207).

6. Procédé selon la revendication 2, dans lequel la forme mise en évidence comprend du texte qui est visualisé avec une couleur différente, en comparaison avec une couleur de visualisation du texte restant dans le message de texte reçu (207).

7. Procédé selon la revendication 1, dans lequel l'étape consistant à faire automatiquement en sorte que le texte qui représente l'URI puisse être sélectionné par l'utilisateur comprend la sélection d'une multiplicité d'URI dans le message, chacun d'eux ayant un pointeur respectif stocké dans la mémoire.

8. Procédé selon la revendication 1, dans lequel la détection du fait que l'utilisateur a sélectionné le texte qui représente l'URI comprend la détection du fait que l'utilisateur a activé une touche prédéfinie sur l'unité mobile, à un moment auquel le texte qui représente l'URI est visualisé sur un dispositif de visualisation de l'unité mobile.

9. Procédé selon la revendication 1, dans lequel l'application (205) qui est associée à l'URI est un navigateur Web.

10. Procédé selon la revendication 9, dans lequel le navigateur Web est un navigateur compatible avec le protocole Wireless Application Protocol, WAP.

11. Procédé selon la revendication 1, dans lequel l'application (205) qui est associée à l'URI est une application de courrier électronique (205).

12. Procédé selon la revendication 1, dans lequel l'application (205) qui est associée à l'URI est un service employant le protocole File Transfer Protocol.

13. Procédé selon la revendication 1, dans lequel l'application (205) qui est associée à l'URI est une technique d'échange pour des forums USENET.

14. Procédé selon la revendication 1, dans lequel l'application (205) qui est associée à l'URI est une technique Gopher pour des services employant les protocoles Gopher et Gopher+.

15. Procédé selon la revendication 1, dans lequel l'application (205) qui est associée à l'URI est une technique Telnet pour des services interactifs utilisant le protocole TELNET.

16. Terminal mobile (201) adapté pour supporter une ou plusieurs applications qui envoient et reçoivent de l'information sur la base d'un indicateur appelé Uniform Resource Indicator, URI, le terminal mobile (201) étant **caractérisé en ce qu'**il comprend en outre :
un moyen logique adapté pour recevoir un message de texte (207) dans le terminal mobile (201);
un moyen logique adapté pour déterminer automatiquement si le message de texte reçu (207) contient du texte qui représente un URI; et
un moyen logique adapté pour effectuer ce qui suit si le message de texte reçu (207) contient le texte qui représente l'URI :
on fait automatiquement en sorte que le texte qui représente l'URI puisse être sélectionné par l'utilisateur, en distinguant l'URI à l'intérieur du message;
on stocke dans une mémoire du terminal mobile (201) un pointeur correspondant dirigé vers l'URI;
on détecte qu'un utilisateur a sélectionné le texte qui représente l'URI;
on extrait de la mémoire le pointeur correspondant dirigé vers l'URI;
on identifie, parmi la ou les applications, une application (205) associée à l'URI; et
on appelle l'application associée (205).

17. Appareil selon la revendication 16, dans lequel le moyen logique adapté pour faire automatiquement en sorte que le texte qui représente l'URI puisse être sélectionné par l'utilisateur comprend un moyen logique adapté pour visualiser, sous une forme mise en évidence, le texte qui représente l'URI, grâce à quoi la visualisation du texte qui représente l'URI est différente du texte restant dans le message de texte reçu (207).

18. Appareil selon la revendication 17, dans lequel la forme mise en évidence comprend du texte souligné.

19. Appareil selon la revendication 17, dans lequel la forme mise en évidence comprend du texte qui est visualisé avec une police inversée.

20. Appareil selon la revendication 17, dans lequel la forme mise en évidence comprend du texte qui est visualisé avec une police en gras, en comparaison avec le texte restant dans le message de texte reçu (207).

21. Appareil selon la revendication 17, dans lequel la forme mise en évidence comprend du texte qui est visualisé avec une couleur différente en comparaison avec une couleur de visualisation du texte restant dans le message de texte reçu (207).

22. Appareil selon la revendication 17, dans lequel le moyen logique adapté pour faire automatiquement en sorte que le texte qui représente l'URI puisse être sélectionné par l'utilisateur comprend en outre un moyen logique adapté pour sélectionner l'un d'une multiplicité d'URI dans le message, chacun ayant un pointeur respectif stocké dans la mémoire.

23. Appareil selon la revendication 16, dans lequel le moyen logique adapté pour détecter le fait que l'utilisateur a sélectionné le texte qui représente l'URI comprend un moyen logique adapté pour détecter le fait que l'utilisateur a activé une touche prédéfinie sur l'unité mobile, à un moment auquel le texte qui représente l'URI est visualisé sur un dispositif de visualisation de l'unité mobile.

24. Appareil selon la revendication 16, dans lequel l'application (205) qui est associée à l'URI est un navigateur Web.

25. Appareil selon la revendication 24, dans lequel le navigateur Web est un navigateur compatible avec le protocole Wireless Application Protocol, WAP.

26. Appareil selon la revendication 16, dans lequel l'application (205) qui est associée à l'URI est une application de courrier électronique (205).

27. Appareil selon la revendication 16, dans lequel l'application (205) qui est associée à l'URI est un service employant le protocole File Transfer Protocol.

28. Appareil selon la revendication 16, dans lequel l'application (205) qui est associée à l'URI est une technique d'échange pour des forums USENET.

29. Appareil selon la revendication 16, dans lequel l'application (205) qui est associée à l'URI est une technique Gopher pour des services employant les protocoles Gopher et Gopher+.

30. Appareil selon la revendication 16, dans lequel l'application (205) qui est associée à l'URI est une technique Telnet pour des services interactifs utilisant le protocole TELNET.
